# EUROPÄISCHE PATENTSCHRIFT

(11) **EP 2 441 332 B1**
(45) Veröffentlichungstag und Bekanntmachung des Hinweises auf die Patenterteilung: **28.06.2017**
(21) Anmeldenummer: 11007641.1
(22) Anmeldetag: 20.09.2011
(51) Int. Cl.: A22C 7/00

(54) **Pressvorrichtung zum Ausdrücken der Wurstmasse aus der Haut einer Wurst**
Press device for expressing sausage mass from the skin of a sausage
Dispositif de presse destiné à expulser une masse de saucisse de sa peau

(30) Priorität: 16.10.2010 DE 102010048753
(43) Veröffentlichungstag der Anmeldung: 18.04.2012
(73) Patentinhaber: Heinrich GmbH, 72622 Nürtingen-Zizishausen (DE)
(72) Erfinder: Greiner, Wolfgang, 72622 Nürtingen (DE)
(74) Vertreter: Kohler Schmid Möbus Patentanwälte

(56) Entgegenhaltungen:
- DE-A1- 10 055 200
- DE-U1- 20 315 926
- JP-A- 9 192 894
- JP-A- 59 085 398

## Beschreibung

Die Erfindung betrifft eine Pressvorrichtung zum Ausdrücken der Wurstmasse aus der Haut einer Wurst mit einer Auflagefläche, die zumindest eine Durchgangsöffnung aufweist, durch die die Wurstmasse pressbar ist, und mit einem Pressenstempel zum Pressen der Wurst gegen die Auflagefläche.

Bei der Herstellung von Würsten gibt es oftmals einen Ausschuss, wenn Würste nicht vollständig gefüllt werden können oder die Haut der Wurst einen Defekt aufweist. Um die Wurstmasse dieser nicht verkaufbaren Würste wiederverwerten, d. h. in eine neue Haut abfüllen zu können, sind Pressvorrichtungen zum Ausdrücken der Wurstmasse aus der Haut einer Wurst bekannt, bei denen die Würste durch ein Anpressband gegen die Außenseite einer Lochtrommel gedrückt und die Wurstmasse durch die Löcher der Lochtrommel gepresst wird (vgl. JP 9 192894 A). An der Innenseite der Lochtrommel befindet sich ein Messer, welches die Wurstmasse abschabt. Auf der Außenseite der Lochtrommel bleiben die Wursthäute zurück, die abgestreift und entsorgt werden können.

Das Anpressband muss dabei mit einem hohen Zug beaufschlagt werden, um die Würste zum Platzen zu bringen, wobei gleichzeitig die Würste nicht unter dem Anpressband herausrutschen dürfen. Der Aufwand bei der Konstruktion solcher Pressvorrichtungen ist daher entsprechend hoch, sodass diese nur in einem größeren Industriebetrieb rentabel eingesetzt werden können.

Der Erfindung liegt demgegenüber die Aufgabe zugrunde, eine handliche und kostengünstige Pressvorrichtung der eingangs genannten Art bereitzustellen, durch die ein Auspressen der Wursthäute auch für kleinere Betriebe ermöglicht wird.

Diese Aufgabe wird erfindungsgemäß durch eine Pressvorrichtung zum Ausdrücken der Wurstmasse aus der Haut einer Wurst gemäß Anspruch 1 mit einer Auflagefläche, die zumindest eine Durchgangsöffnung aufweist, durch die die Wurstmasse pressbar ist, und mit einem Pressenstempel zum Pressen der Wurst gegen die Auflagefläche gelöst, wobei an der Pressvorrichtung zumindest ein, vorzugsweise mehrere spitze oder scharfe Fixiervorsprünge zum Zerstechen und/oder Zerschneiden und Fixieren der Haut vorgesehen sind. Durch den zumindest einen Fixiervorsprung werden die Würste beim Auspressen zerstochen und/oder zerschnitten, sodass nur wenig Kraftaufwand zum Auspressen der Würste nötig ist. Gleichzeitig werden die Würste durch den Fixiervorsprung in der Pressvorrichtung gehalten, sodass die Pressvorrichtung durch einfache konstruktive Mittel herstellbar ist.

In bevorzugter Ausgestaltung der Erfindung kann der Fixiervorsprung am Pressenstempel ausgebildet oder angeordnet sein. Der Fixiervorsprung wird auf diese Art und Weise beim Zurückziehen des Pressenstempels aus der Haut herausgezogen.

In einer besonders bevorzugten Ausführungsform kann der Fixiervorsprung in Form eines Stiftes ausgebildet sein. Insbesondere kann der Fixiervorsprung einenends spitz zulaufen und so die Haut bei einer Bewegung des Pressenstempels in Richtung der Wurst durchstechen. Der Fixiervorsprung ist zumindest teilweise in die Durchgangsöffnung einführbar, so dass bei Anordnung des Fixiervorsprungs am Pressenstempel dieser bis zum Erreichen der Auflagefläche bewegt und die Würste somit vollständig ausgepresst werden. Die Durchgangsöffnung ist wesentlich größer als der Fixiervorsprung ausgeführt, um den Abfluss der Wurstmasse durch die Durchgangsöffnung zu erleichtern.

In einem besonders bevorzugten Ausführungsbeispiel der Erfindung kann ein insbesondere plattenförmiges Abstreifelement vorgesehen sein, das zumindest eine Abstreif-Durchgangsöffnung aufweist, durch die der mindestens eine Fixiervorsprung hindurchgeführt ist, wobei das Abstreifelement nach dem Pressvorgang zum Abstreifen der Haut von dem mindestens einen Fixiervorsprung relativ zu diesem bewegbar ist. Das Abstreifelement kann hierzu nach dem Pressvorgang in Richtung der Haut bewegt werden. Die Haut bleibt dadurch nach dem Pressvorgang auf der Auflagefläche zurück und kann einfach entsorgt werden.

Die Pressvorrichtung kann einen Behälter aufweisen, in dem der Pressenstempel auf und ab bewegbar ist und in dem die Auflagefläche den Boden des Behälters bildet. Durch die Behälterwand können die Würste während des Pressvorgangs nicht zur Seite hin entweichen. Der Behälter kann ferner der Pressvorrichtung entnehmbar sein, sodass der Behälter leicht mit Würsten gefüllt werden kann.

Um die Auflagefläche besonders einfach reinigen zu können, kann der Behälter an seiner Unterseite geöffnet und die Auflagefläche entnehmbar im Behälter angeordnet sein.

Die Wurstmasse kann dabei zusätzlich zu den Durchgangsöffnungen in der Auflagefläche durch einen Durchgang zwischen der Behälterwand und der Auflagefläche abfließen. Hierzu kann zwischen der Behälterwand und der Auflagefläche zumindest ein Abstandshalter vorgesehen sein, durch den der Durchgang zwischen der Behälterwand und der Auflagefläche ausgebildet wird.

Die Pressvorrichtung kann eine dem Pressenstempel vorgeordnete Abtropfstation aufweisen, von der aus der Behälter unter den Pressenstempel bewegbar ist. Unterhalb der Abtropfstation kann ein Wasserbehälter angeordnet sein, in den das Wasser nasser Würste abtropfen kann. Wenn die Würste genügend trocken sind, kann der Behälter mit den sich darin befindenden Würsten unter dem Pressenstempel bewegt, vorzugsweise verschoben werden. Hierzu kann eine entsprechende Behälterauflage vorgesehen sein, die dies ermöglicht.

Um die ausgepresste Wurstmasse einfach entnehmen zu können, kann unter der Auflagefläche ein insbesondere entnehmbarer Auffangbehälter zur Aufnahme der ausgepressten Wurstmasse vorgesehen sein. Der Auffangbehälter kann beispielsweise mittels einer Schienenführung unter die Auflagefläche verschiebbar sein.

Der Pressenstempel kann von Hand, beispielsweise durch eine Spindel oder einen Hebelmechanismus bewegbar sein. Alternativ oder zusätzlich dazu kann zur Bewegung des Pressenstempels ein hydraulischer, pneumatischer oder ein über eine motorbetriebene Spindel auf den Pressenstempel wirkender Pressenantrieb vorgesehen sein. Der Pressvorgang kann dabei durch eine kontinuierliche Bewegung des Pressenstempels oder getaktet, in Stufen ausgeführt werden. Es kann ferner eine entsprechende Zeit- oder Taktsteuerung zur Steuerung des Pressvorgangs vorgesehen sein.

Um Verletzungen des Benutzers vorzubeugen, kann zur Auslösung des Pressenantriebs eine Zwei-Hand-Betätigung vorgesehen sein. Eine Zwei-Hand-Betätigung lässt sich beispielsweise dadurch realisieren, dass zur Auslösung des Pressenantriebs zwei Schalter gleichzeitig betätigt werden müssen, wobei die Schalter so weit auseinander liegen, dass sie nicht mit einer Hand bedient werden können.

Weitere Vorteile ergeben sich aus der nachfolgend beschriebenen Zeichnung, die ein Ausführungsbeispiel einer erfindungsgemäßen Pressvorrichtung darstellt.

Es zeigen:
- Fig. 1: eine teilweise geschnittene Ansicht einer erfindungsgemäßen Pressvorrichtung; und
- Fig. 2: eine Draufsicht auf die Pressvorrichtung aus Fig. 1.

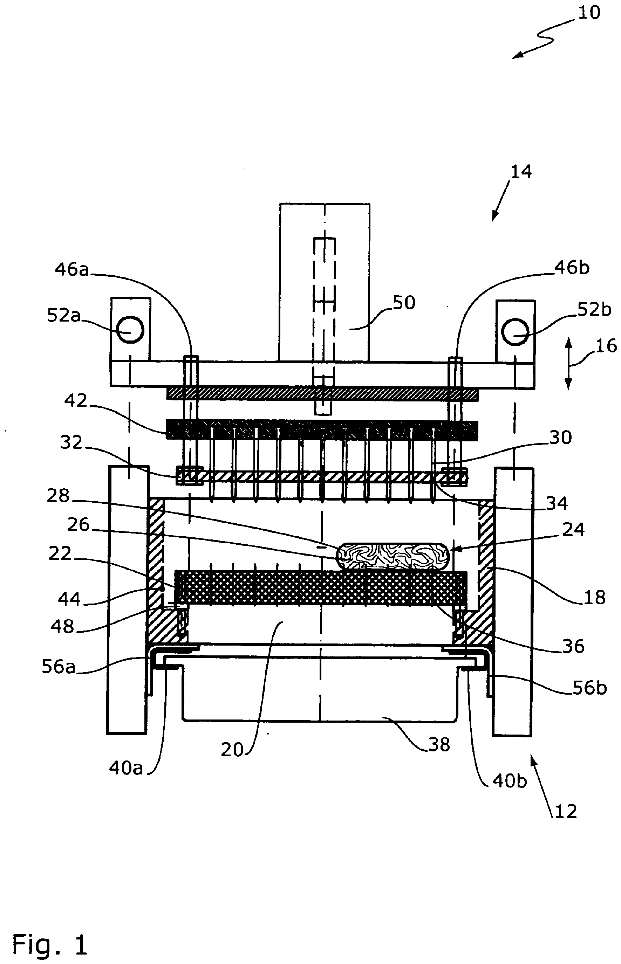

Fig. 1 zeigt eine erfindungsgemäße Pressvorrichtung 10 mit einem Rahmen 12 und einem Pressenstempel 14. Der Pressenstempel 14 ist in nicht näher dargestellten Führungen in den Richtungen des Doppelpfeils 16 auf und ab bewegbar. In dem Rahmen 12 befindet sich ein entnehmbarer Behälter 18, der an seiner Unterseite 20 geöffnet ist und in den eine plattenförmige Auflagefläche 22 eingelegt ist. Auf die Auflagefläche 22 ist eine schematisch dargestellte Wurst 24 aufgelegt. Die Wurstmasse 26 soll im Verlauf eines Pressvorgangs aus der Haut 28 der Wurst 24 herausgepresst werden, um die Wurstmasse 26 wiederverwerten zu können.

Während des Pressvorgangs wird der Pressenstempel 14 herabgesenkt. Mehrere Fixiervorsprünge, von denen aus Gründen der Übersichtlichkeit lediglich einer mit der Bezugsziffer 30 versehen ist, durchstechen dabei die Wurst 24. Ein plattenförmig ausgebildetes Abstreifelement 32, an dem mehrere Abstreif-Durchgangsöffnungen ausgebildet sind, von denen aus Gründen der Übersichtlichkeit lediglich eine mit der Bezugsziffer 34 versehen ist, drückt beim Auspressen auf die Wurst 24.

Die Auflagefläche 22 weist mehrere Durchgangsöffnungen auf, von denen ebenfalls aus Gründen der Übersichtlichkeit nur eine mit der Bezugsziffer 36 bezeichnet ist. Wird, nachdem die Fixiervorsprünge 30 die Wurst 24 vollständig durchstoßen haben, der Pressenstempel 14 weiter abgesenkt, werden die Fixiervorsprünge 30 von den Durchgangsöffnungen 36 aufgenommen, sodass das Abstreifelement 32 so weit in Richtung der Auflagefläche 22 abgesenkt werden kann, dass die Wurst 24 vollständig ausgepresst werden kann. Der Durchmesser der Durchgangsöffnungen 36 ist wesentlich größer ausgeführt als der Durchmesser der Fixiervorsprünge 30, um auch bei in die Durchgangsöffnungen 36 eingeführten Fixiervorsprüngen 30 einen Abfluss der Wurstmasse 26 durch die Durchgangsöffnungen 36 zu ermöglichen. Die Fixiervorsprünge 30 sind stiftartig ausgebildet und fixieren die Wurst 24 während des Pressvorgangs. Die Wurstmasse 26 kann in einem Auffangbehälter 38 aufgefangen werden. Der Auffangbehälter 38 ist durch eine zwei Schienen 40a, 40b aufweisende Schienenführung der Pressvorrichtung 10 entnehmbar.

Die Fixiervorsprünge 30 sind fest mit einer Fixierplatte 42 verbunden. Die Fixierplatte 42 kann an ihrem Außenrand eine Dichtung aufweisen, um während des Pressvorgangs den Behälter 18 nach oben hin abzudichten. Die Dichtung liegt hierzu an einer Behälterwand 44 des Behälters 18 während des Pressvorgangs an. Die Fixierplatte 42 ist, durch Führungsstifte 46a, 46b geführt, beweglich zu dem Abstreifelement 32 ausgebildet. Während oder nach dem Anheben des Pressenstempels 14 kann die Fixierplatte 42 relativ zum Abstreifelement 32 nach oben bewegt werden, sodass an den Fixiervorsprüngen 30 haftende Haut 28 abgestreift werden kann. Die Haut 28 verbleibt auf der Auflagefläche 22 und kann von dort einfach entsorgt werden. In den Führungsstiften 46a, b können Federn geführt sein (nicht gezeigt), die die Fixierplatte 42 in einer Vorzugsstellung halten können.

Die Auflagefläche 22 ist über in Stiften geführte Abstandshalter mit dem Behälter 18 verbunden, von denen einer mit der Bezugsziffer 48 bezeichnet ist. Durch die Abstandshalter 48 wird ein Durchgang zwischen der Behälterwand 44 und der Auflagefläche 22 ausgebildet, durch den ebenfalls Wurstmasse in den Auffangbehälter 38 abfließen kann.

Die Auf- und Ab-Bewegung des Pressenstempels 14 erfolgt durch einen Pressenantrieb 50, der in Form eines pneumatischen Zylinders ausgebildet ist. Der Pressenantrieb 50 kann, statt, wie gezeigt, unmittelbar mit dem Pressenstempel 14, auch mit der Fixierplatte 42 verbunden sein. Zur Auslösung des Pressenantriebs 50 ist eine Zwei-Hand-Betätigung vorgesehen, die in Form zweier Schalter 52a, 52b ausgebildet ist, wobei die beiden Schalter 52a, b so weit auseinander liegen, dass sie nicht gleichzeitig mit einer Hand betätigt werden können.

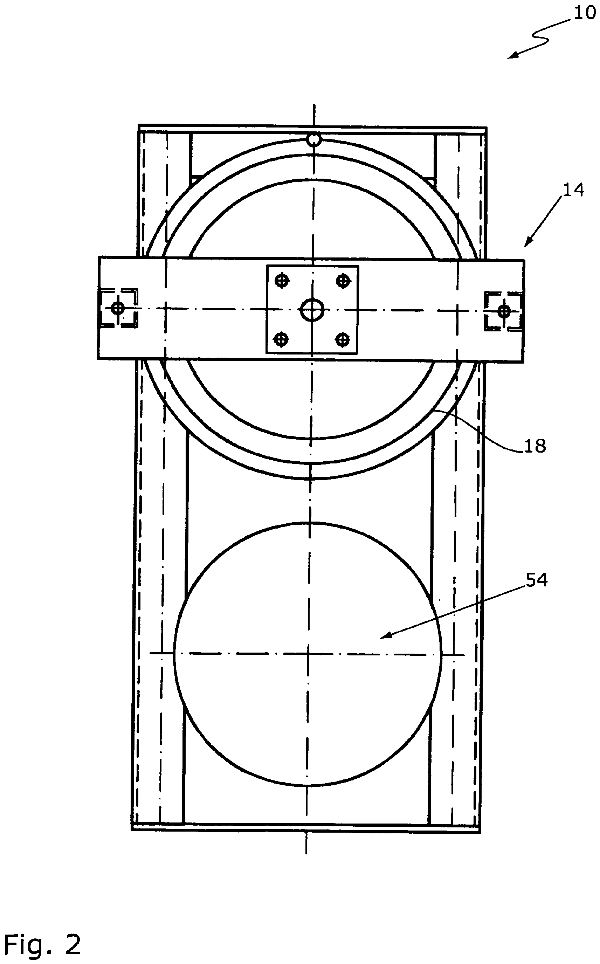

Fig. 2 zeigt eine Draufsicht der Pressvorrichtung 10 aus Fig. 1. In der gezeigten Darstellung befindet sich der Behälter 18 unter dem Pressenstempel 14. Vor dem Pressvorgang kann sich der Behälter 18 über einer Abtropfstation 54 befinden. Die Abtropfstation 54 ist im Wesentlichen in Form einer Öffnung ausgebildet, unter der sich ein Wasserbehälter (nicht gezeigt) befindet, in den das Wasser nasser Würste abtropfen kann. Auf der Abtropfstation 54 können so die nassen Würste trocknen und anschließend unter den Pressenstempel 14 verfahren werden. Nach dem Pressvorgang kann der Behälter 18 zurück auf die Abtropfstation 54 geschoben und die ausgepressten Wursthäute aus dem Behälter 18 entnommen werden. Die Bewegung des Behälters 18 zwischen Abtropfstation 54 und Pressenstempel 14 kann dabei gemäß Fig. 1 auf einer durch zwei Winkel 56a, b ausgebildeten Behälterauflage erfolgen.

## Patentansprüche

1. Pressvorrichtung (10) zum Ausdrücken der Wurstmasse (22) aus der Haut (28) einer Wurst (24), mit einer Auflagefläche (22), die zumindest eine Durchgangsöffnung (36) aufweist, durch die die Wurstmasse (22) pressbar ist, und mit einem Pressenstempel (14) zum Pressen der Wurst (24) gegen die Auflagefläche (22), wobei an der Pressvorrichtung (10) zumindest ein, vorzugsweise mehrere, spitze oder scharfe Fixiervorsprünge (30) zum Zerstechen und/oder Zerschneiden und Fixieren der Haut (28) vorgesehen sind, **dadurch gekennzeichnet, dass** der Fixiervorsprung (30) zumindest teilweise in die Durchgangsöffnung (36) einführbar ist, deren Durchmesser derart größer gewählt ist als der Durchmesser des Fixiervorsprungs (30), dass auch bei in die Durchgangsöffnung (36) eingeführtem Fixiervorsprung (30) ein Abfluss der Wurstmasse (26) durch die Durchgangsöffnung (36) möglich ist:

2. Pressvorrichtung nach Anspruch 1, **dadurch gekennzeichnet, dass** der Fixiervorsprung (30) am Pressenstempel (14) ausgebildet oder angeordnet ist.

3. Pressvorrichtung nach Anspruch 1 oder 2, **dadurch gekennzeichnet, dass** der Fixiervorsprung (30) in Form eines Stiftes ausgebildet ist.

4. Pressvorrichtung nach einem der vorhergehenden Ansprüche, **dadurch gekennzeichnet, dass** ein, insbesondere plattenförmiges, Abstreifelement (32) vorgesehen ist, das zumindest eine Abstreif-Durchgangsöffnung (34) aufweist, durch die der Fixiervorsprung (30) hindurchgeführt ist und das Abstreifelement (32) nach dem Pressvorgang zum Abstreifen der Haut (28) von dem Fixiervorsprung (30) relativ zu dem Fixiervorsprung (30) bewegbar ist.

5. Pressvorrichtung nach einem der vorhergehenden Ansprüche, **dadurch gekennzeichnet, dass** die Pressvorrichtung (10) einen Behälter (18) aufweist, in dem der Pressenstempel (14) auf und ab bewegbar ist und in dem die Auflagefläche (22) den Boden des Behälters (18) bildet.

6. Pressvorrichtung nach anspruch 5, **dadurch gekennzeichnet, dass** der Behälter (18) entnehmbar in der Pressvorrichtung (10) angeordnet ist.

7. Pressvorrichtung nach Anspruch 5 oder 6, **dadurch gekennzeichnet, dass** der Behälter (18) an seiner Unterseite (20) geöffnet und die Auflagefläche (22) entnehmbar im Behälter (18) angeordnet ist.

8. Pressvorrichtung nach einem der Ansprüche 5 bis 7, **dadurch gekennzeichnet, dass** zwischen der Behälterwand (44) und der Auflagefläche (22) zumindest ein Abstandshalter (48) vorgesehen ist, durch den ein Durchgang zwischen der Behälterwand (18) und der Auflagefläche (22) ausgebildet wird, durch den zumindest ein Teil der Wurstmasse (26) abfließen kann.

9. Pressvorrichtung nach einem der Ansprüche 5 bis 8, **dadurch gekennzeichnet, dass** die Pressvorrichtung (10) eine dem Pressenstempel (14) vorgeordnete Abtropfstation (54) aufweist, von der der Behälter (18) unter den Pressenstempel (14) bewegbar ist.

10. Pressvorrichtung nach einem der vorhergehenden Ansprüche, **dadurch gekennzeichnet, dass** unter der Auflagefläche (22) ein insbesondere entnehmbarer Auffangbehälter (38) zur Aufnahme der ausgepressten Wurstmasse (26) vorgesehen ist.

11. Pressvorrichtung nach einem der vorhergehenden Ansprüche, **dadurch gekennzeichnet, dass** zur Bewegung des Pressenstempels (14) ein hydraulischer, pneumatischer oder ein über eine motorbetriebene Spindel auf den Pressenstempel (14) wirkender Pressenantrieb (50) vorgesehen ist.

12. Pressvorrichtung nach Anspruch 11, **dadurch gekennzeichnet, dass** zur Auslösung des Pressenantriebs (50) eine Zwei-Hand-Betätigung vorgesehen ist.

## Claims

1. Pressing device (10) for pressing the sausage meat (22) out of the skin (28) of a sausage (24), with a supporting surface (22), which has at least one passage opening (36), through which the sausage meat (22) may be pressed, and with a press stamp (14) for pressing the sausage (24) against the supporting surface (22), in which at least one, preferably several, pointed or sharp fixing projections (30) for piercing and/or cutting and fixing the skin (28) are provided on the pressing device (10), **characterised in that** the fixing projection (30) may be inserted at least partly into the passage opening (36), the diameter of which is selected to be larger than the diameter of the fixing projection (30) in such a way that an outflow of sausage meat (26) through the passage opening (36) is possible also with the fixing projection (30) inserted into the passage opening (36):

2. Pressing device according to claim 1, **characterised in that** the fixing projection (30) is arranged or made on the press stamp (14).

3. Pressing device according to claim 1 or 2, **characterised in that** the fixing projection (30) is made in the form of a pin.

4. Pressing device according to one of the previous claims, **characterised in that** a, particularly plate-shaped, stripper element (32) is provided, which has at least one stripper-passage opening (34), through which the fixing projection (30) is passed and the stripper element (32) may be moved in relation to the fixing projection (30) for stripping away the skin (28) from the fixing projection (30) after the pressing process.

5. Pressing device according to one of the previous claims, **characterised in that** the pressing device (10) has a container (18), in which the press stamp (14) may be moved up and down and in which the supporting surface (22) forms the floor of the container (18).

6. Pressing device according to claim 5, **characterised in that** the container (18) is arranged in the pressing device (10) so that it may be removed.

7. Pressing device according to claim 5 or 6, **characterised in that** the container (18) is open at the bottom (20) and the supporting surface (22) is arranged in the container (18) so that it may be removed.

8. Pressing device according to one of claims 5 to 7, **characterised in that** at least one spacer (48) is provided between the container wall (44) and the supporting surface (22), through which a passage is formed between the container wall (18) and the supporting surface (22), through which at least a

9. Pressing device according to one of claims 5 to 8, **characterised in that** the pressing device (10) has a draining station (54) arranged before the press stamp (14), from which the container (18) may be moved under the press stamp (14).

10. Pressing device according to one of the previous claims, **characterised in that** a collecting container (38), particularly that may be removed, is provided under the supporting surface (22) for collecting the pressed out sausage meat (26).

11. Pressing device according to one of the previous claims, **characterised in that** a press drive (50) that is hydraulic, pneumatic or acts on the press stamp (14) through a motor driven spindle is provided for moving the press stamp (14).

12. Pressing device according to claim 11, **characterised in that** two-hand operation is provided for releasing the press drive (50).

## Revendications

1. Dispositif de pressage (10) pour expulser la chair à saucisse (26) hors de la peau (28) d'une saucisse (24), comprenant une surface de pose (22) qui comporte au moins une ouverture traversante (36) à travers laquelle la chair à saucisse (22) est susceptible d'être pressée, et comprenant un poinçon de presse (14) pour presser la saucisse (24) contre la surface de pose (22), dans lequel il est prévu sur le dispositif de pressage (10) au moins une et de préférence plusieurs saillies de fixation (30) pointues ou acérées pour perforer et/ou pour découper et fixer la peau (28), **caractérisé en ce que** la saillie de fixation (30) peut être introduite au moins partiellement dans l'ouverture traversante (36), dont le diamètre est choisi plus grand que le diamètre de la saillie de fixation (30) de telle façon que même lorsque la saillie de fixation (30) est introduite dans l'ouverture traversante (36) un écoulement de la chair à saucisse (26) à travers l'ouverture traversante (36) est possible.

2. Dispositif de pressage selon la revendication 1, **caractérisé en ce que** la saillie de fixation (30) est réalisée et/ou agencée sur le poinçon de presse (14).

3. Dispositif de pressage selon la revendication 1 ou 2, **caractérisé en ce que** la saillie de fixation (30) est réalisée sous la forme d'une tige.

4. Dispositif de pressage selon l'une des revendications précédentes, **caractérisé en ce qu'**il est prévu un élément de raclage (32), en particulier en forme de plaque, qui comporte au moins une ouverture traversante de raclage (34), à travers laquelle est passée la saillie de fixation (30) et, après l'opération de pressage, l'élément de raclage (32) est déplaçable relativement à la saillie de fixation (30) afin de racler la peau (28) depuis la saillie de fixation (30).

5. Dispositif de pressage selon l'une des revendications précédentes, **caractérisé en ce que** le dispositif de pressage (10) comprend un récipient (18) dans lequel le poinçon de presse (14) est déplaçable en montant et en descendant, et dans lequel la surface de pose (22) forme le fond du récipient (18).

6. Dispositif de pressage selon la revendication 5, **caractérisé en ce que** le récipient (18) est agencé dans le dispositif de pressage (10) de manière à pouvoir être enlevé.

7. Dispositif de pressage selon la revendication 5 ou 6, **caractérisé en ce que** le récipient (18) est ouvert sur son côté inférieur (20) et la surface de pose (22) est agencée dans le récipient (18) de manière à pouvoir être enlevée.

8. Dispositif de pressage selon l'une des revendications 5 à 7, **caractérisé en ce qu'**il est prévu au moins un élément de maintien d'écartement (48), entre la paroi du récipient (44) et la surface de pose (22), élément à travers lequel est réalisée une traversée entre la paroi (18) du récipient et la surface de pose (22), traversée à travers laquelle au moins une partie de la chair à saucisse (26) est capable de s'écouler.

9. Dispositif de pressage selon l'une des revendications 5 à 8, **caractérisé en ce que** le dispositif de pressage (10) comprend un poste d'égouttage (54) agencé en avant du poinçon de presse (14) et depuis lequel le récipient (18) est déplaçable jusque sous le poinçon de presse (14).

10. Dispositif de pressage selon l'une des revendications précédentes, **caractérisé en ce qu'**il est prévu au-dessous de la surface de pose (22) un récipient de collecte (38), en particulier capable d'être enlevé, pour recevoir la chair à saucisse (26) chassée par pressage.

11. Dispositif de pressage selon l'une des revendications précédentes, **caractérisé en ce que** pour déplacer le poinçon de presse (14) il est prévu un entraînement de presse (50) agissant sur le poinçon de presse (14) par voie hydraulique, pneumatique, ou au moyen d'une broche entraînée par moteur.

12. Dispositif de pressage selon la revendication 11, **caractérisé en ce que** pour déclencher l'entraînement de presse (50) il est prévu une commande à deux mains.
